# EUROPEAN PATENT SPECIFICATION

(11) **EP 4 227 573 B1**
(45) Date of publication and mention of the grant of the patent: **04.12.2024**
(21) Application number: 22446502.1
(22) Date of filing: 22.11.2022
(51) Int. Cl.: F17C 1/00, F17C 13/08

(54) **FLUID-TIGHT SUBTERRANEAN FLUID STORAGE**
FLÜSSIGKEITSDICHTE SPEICHERUNG UNTERIRDISCHER FLÜSSIGKEITEN
STOCKAGE SOUTERRAIN DE FLUIDE ETANCHE AUX FLUIDES

(30) Priority: 14.02.2022 SE 2250143
(43) Date of publication of application: 16.08.2023
(73) Proprietor: H2Hive AB, 131 33 Nacka (SE)
(72) Inventor: GUSTAFSSON, Mikael, 13975 Djurhamn (SE); AXELSSON, Gary, 19134 Sollentuna (SE); BERGMAN, Jonas, 75592 Uppsala (SE)
(74) Representative: Kransell & Wennborg KB

(56) References cited:
- EP-A1- 2 832 666
- WO-A1-2018/102196
- JP-U- S57 143 190
- US-A1- 2012 125 619

## Description

### TECHNICAL FIELD

The present disclosure relates to a method of preparing a fluid-tight subterranean fluid storage, e.g. for storing pressurized hydrogen (H₂).

### BACKGROUND

Hydrogen has a high stored energy level in relation to its mass and is free of carbon. Due to these and other attractive properties, hydrogen is foreseen to be used much more in the future. To use hydrogen on a large scale, an infrastructure of production, transportation and storage is needed. One way of storing gas underground is known from EP 2832666 A1.

### SUMMARY

It is an objective of the present invention to provide an improved method of providing a fluid storage, e.g. for pressurized hydrogen gas, but any other compounds or mixtures of compounds in liquid and/or gas form may be stored using a suitable embodiment of the fluid-tight subterranean fluid storage of the present invention.

According to an aspect of the present invention, there is provided a method of preparing/constructing a fluid-tight subterranean fluid storage. The method comprises boring a borehole in a rock mass, e.g. vertically or at an acute angle to a vertical axis with an upper end at a surface/bedrock of the rock mass. The method also comprises inserting a fluid-tight pipe longitudinally, e.g. concentrically, into the borehole, the pipe comprising a lateral wall in the form of a right circular cylindrical shell having an outer diameter which is smaller than a diameter of the borehole, a bottom end cap fastened to a bottom end of the lateral wall (e.g. arranged to rest against a bottom of the borehole either directly or via a rigid frame), and a top end cap fastened to a top end of the lateral wall. The method also comprises, via piping (typically comprising a valve opening/allowing flow or closing off/preventing flow in the piping) through the top end cap, pressurizing the fluid-tight pipe to a pressure above a predetermined threshold, whereby the lateral wall is deformed until it is pressed against an inner surface of the borehole along a longitudinal extent of the lateral wall, forming a fluid-tight lining of the borehole. The lining together with the bottom end cap and the top end cap forms the fluid-tight subterranean fluid storage in the borehole.

According to another aspect of the present invention, there is provided a fluid-tight subterranean fluid storage prepared by an embodiment of the method of the present disclosure.

According to another aspect of the present invention, there is provided a fluid-tight subterranean fluid storage comprising a fluid-tight lining of a bore hole in a rock mass, a bottom end cap fastened to a bottom end of the lining, a top end cap fastened to a top end of the lining, and piping through the top end cap. The lining is formed by a deformed right circular cylindrical shell, inserted longitudinally into the borehole and deformed by means of an overpressure applied via the piping.

By deforming the material of the lateral wall to rest against the rock at the inner surface of the borehole, the thickness of the lateral wall may be reduced since it does not have to by itself withstand the pressure of the stored fluid. Also, there is no need to encapsulate the storage (e.g. in cement). Instead, the pipe (having a slightly smaller diameter than the borehole) can be assembled and inserted into the borehole and then expanded to directly contact the rock mass.

It is to be noted that any feature of any of the aspects may be applied to any other aspect, wherever appropriate. Likewise, any advantage of any of the aspects may apply to any of the other aspects. Other objectives, features and advantages of the enclosed embodiments will be apparent from the following detailed disclosure, from the attached dependent claims as well as from the drawings.

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order disclosed, unless explicitly stated. The use of "first", "second" etc. for different features/components of the present disclosure are only intended to distinguish the features/components from other similar features/components and not to impart any order or hierarchy to the features/components.

### BRIEF DESCRIPTION OF THE DRAWINGS

Embodiments will be described, by way of example, with reference to the accompanying drawings, in which:
Figures 1a-1d illustrates different conventional systems comprising a hydrogen storage for which embodiments of the fluid storage in accordance with the present invention may be used.
Figure 2 is a schematic cross-sectional view of a borehole in a rock mass, with a fluid-tight pipe concentrically arranged in the borehole, in accordance with some embodiments of the present invention.
Figure 3 is a graph showing the over pressure needed to plastically deform different materials having different yield points at different wall thicknesses.
Figure 4 is a schematic view in longitudinal section of a fluid-tight subterranean fluid storage in a borehole in a rock mass, in accordance with some embodiments of the present invention.
Figure 5 is a schematic flow chart of some embodiments of a method of the present invention.

### DETAILED DESCRIPTION

Embodiments will now be described more fully hereinafter with reference to the accompanying drawings, in which certain embodiments are shown. However, other embodiments in many different forms are possible within the scope of the present disclosure. Rather, the following embodiments are provided by way of example so that this disclosure will be thorough and complete, and will fully convey the scope of the disclosure to those skilled in the art. Like numbers refer to like elements throughout the description.

The fluid-tight subterranean fluid storage described herein is a vessel in a rock mass borehole, which can be used to store pressurized fluid in gas and/or liquid form, e.g. hydrogen (H₂), methane (CH₄), propane (C₃H₈), natural gas, carbon dioxide (CO₂), nitrogen (N₂), ammonia (NH₃), air, water, and/or ammonium (NH₄), preferably hydrogen.

The storage method can be used for single fluid-tight subterranean fluid storage for fluids with high pressure, underground or for larger storage needs. Fluid-tight subterranean fluid storages can be placed in a suitable pattern with adequate distance between them. There is no upper limit for the number of storages which can be safely deployed provided the rock mass has geologically appropriate characteristics and geomechanical properties. An advantage of the storage method is that it can be made very safe compared to other known storage methods. Any leaks, faults, other breakdowns or terrorist attacks would have a limited impact since the stored fluid could be spread over a large and possibly fenced-in area. Any gas which leaks may rise rapidly into the atmosphere. Proximity to production and/or distribution of hydrogen and electricity may be advantageous, as it opens up the possibility to utilize residual heat during conversion from electricity to hydrogen or back. The possibility of recovering the oxygen from the process during production of hydrogen gas may also be considered.

To understand the applied use of this storage method, here follow some examples of using hydrogen in combination with the fluid-tight subterranean fluid storage of the present disclosure.

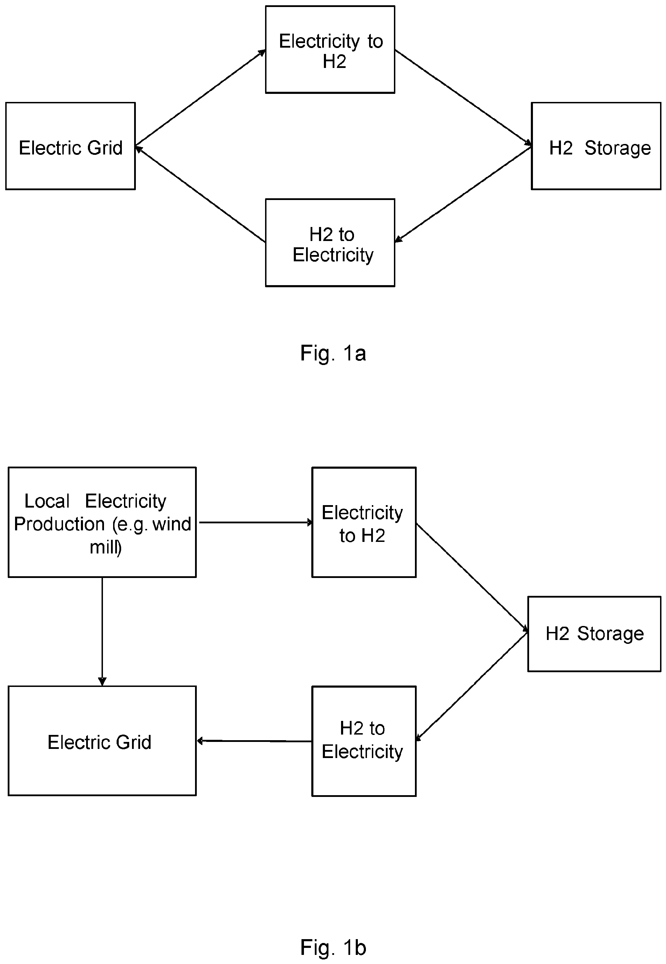

Figure 1a illustrates that a storage may be built close to an electric grid and on a property and rock mass which is geologically appropriate for the storage method. At the location, electricity and water can be converted to hydrogen and stored. Later, the stored hydrogen can be extracted from the storage, converted to electricity and water, and used in the electric grid.

Figure 1b illustrates that a storage may be built close to an electric producer and on a property which is geologically suitable for the storage method. At the location, electricity and water can be converted to hydrogen and stored. Later, the stored hydrogen can be extracted from the storage, converted to electricity and water, and used in the electric grid.

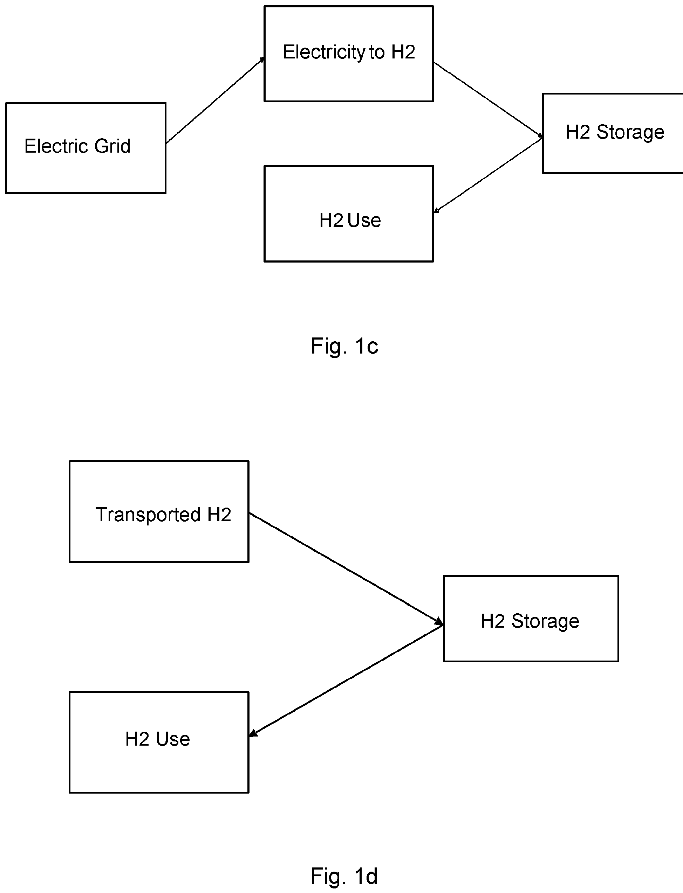

Figure 1c illustrates that a storage may be built close to an electric grid, close to a hydrogen consumer and on a property which is geologically suitable for the storage method. At the location, electricity and water can be converted to hydrogen and stored. Later, the stored hydrogen can be extracted from the storage and used by the consumer.

Figure 1d illustrates that a storage may be built close to a hydrogen consumer, where hydrogen transport is possible and on a property which is geologically suitable for the storage method. At the location, hydrogen can be unloaded from the transport and stored. Later, the stored hydrogen can be extracted from the storage and used by the consumer.

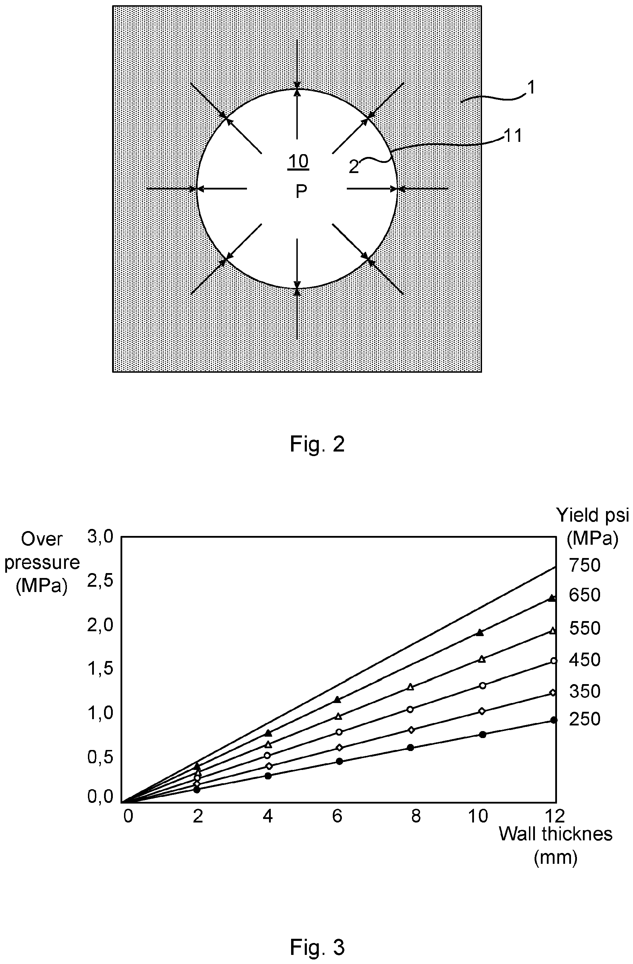

Figure 2 illustrates the pressurizing of the pipe to deform the lateral wall 2 to be pressed directly against the inner surface 11 of the bore hole 10 in the rock mass 1. The pressure P is applied within the fluid-tight pipe, exerting a radial force on the lateral wall 2 towards the inner surface 11 of the borehole 10 as illustrated by the outward pointing arrows. The rock mass will apply a corresponding force in the opposite direction, as illustrated by the inward pointing arrows, when the wall 2 has been deformed to directly contact the rock surface 11.

The deformation is plastic deformation, especially when the lateral wall 2 is of a rigid material, e.g. a polymeric (plastic) material or a metallic material, e.g. steel as discussed further below. Examples of polymeric materials include thermosetting materials, which may advantageously be cured after deformation, and thermoplastic materials. Thermoplastic materials may have the advantage of enabling joining of segments of the right circular cylindrical shell of the lateral wall 2 by heating and then joining segment ends to each other to form the lateral wall. In some embodiments, the polymeric material, e.g. a thermosetting polymeric material (resin) such as epoxy, may be fibre-reinforced, e.g. with glass and/or carbon fibres, to form a composite material.

In some other embodiments, not being a part of the claimed invention, the deformation is elastic deformation, especially when the lateral wall 2 is of an elastic material (e.g. an elastomer), e.g. a natural or synthetic rubber. In case of elastic deformation, the lining 2 is held in place against the inner surface 11 of the borehole 10 by an overpressure within the fluid storage 40.

For facilitating the pressurizing with the pressure P to achieve the deformation, e.g. plastic or elastic deformation, of the lateral wall 2, the pipe may preferably be filled with water whereby the pressure P is the pressure of the water in the pipe.

Preferably, the rock mass 1 has a strength exceeding the pressure P, to prevent failure of the rock. Table 1 shows typical examples of rock strength of rock mass found in Scandinavia.

**Table 1**

| **Parameter** | **Unit** | **Granit** | **Gneiss** | **Basalt** |
|---|---|---|---|---|
| Uniaxial Compressive strength | MPa | 169 | 130 | 207 |
| Elasticity modulus | GPa | 42 | 50 | 82 |

Figure 3 illustrates the over pressure, in mega Pascal (MPa), needed to plastically deform different materials having different yield points, in MPa, at different wall thicknesses, in millimetres (mm). The graph can be used for selecting a suitable thickness of a rigid material of the lateral wall 2, depending on the rigid material used and the pressure P which can be applied.

The rigid material is typically metallic, e.g. steel, but polymeric or composite materials, e.g. being or comprising polyethylene (PE) are also contemplated. Table 2 shows the lower yield point for some currently preferred steels, which are relatively cheap, readily available and easy to weld. Note that Table 2 shows the lower yield point (R_{eL}) rather than the slightly higher upper yield point (R_{eH}).

**Table 2**

| Material | R_{eL} (MPa) |
|---|---|
| S235JR | 210 |
| S275JR | 250 |
| S355N | 350 |
| S420N | 390 |

Table 3 shows some examples of pressure P needed form plastic deformation of the lateral wall 2 for different diameters and thicknesses of the wall 2, for two of the steels of Table 2.

**Table 3**

| Material | ReL (MPa) | Borehole Diameter (mm) | Pipe Diameter (mm) | Wall thickness (mm) | Pressure P (MPa) |
|---|---|---|---|---|---|
| S235JR | 210 | 1000 | 980 | 4 | 1,70 |
| S235JR | 210 | 1000 | 980 | 6 | 2,55 |
| S235JR | 210 | 2000 | 1960 | 5 | 1,05 |
| S235JR | 210 | 2000 | 1960 | 7 | 1,50 |
| S235JR | 210 | 3000 | 2940 | 6 | 0,85 |
| S235JR | 210 | 3000 | 2940 | 8 | 1,15 |
| S420N | 390 | 1000 | 980 | 3 | 2,40 |
| S420N | 390 | 1000 | 980 | 5 | 3,95 |
| S420N | 390 | 2000 | 1960 | 4 | 1,60 |
| S420N | 390 | 2000 | 1960 | 6 | 2,40 |
| S420N | 390 | 3000 | 2940 | 5 | 1,35 |
| S420N | 390 | 3000 | 2940 | 7 | 1,85 |

In some embodiments of the present invention, the upper yield point (R_{eH}) of the rigid material is within the range of 200-600 MPa, preferably 200-400 MPa. The yield point may be determined using tensile testing in accordance with ISO 6892 for metallics or ISO 527 for plastics/polymerics and composites. Additionally or alternatively, in some embodiments of the present invention, the pressure P to which the fluid-tight pipe is pressurized is within the range 0.5-5 MPa, preferably 1-3 MPa. Additionally or alternatively, in some embodiments of the present invention, the material, e.g. a rigid material, of the lateral wall 2 is metallic or polymeric, preferably steel e.g. S235JR, S275JR, S355N or S420N. Additionally or alternatively, the lateral wall 2, before pressurizing, has a thickness within the range of 1-12 mm, e.g. 3-10 mm, preferably 4-8 mm.

Conveniently, the outer diameter of the lateral wall 2 is only slightly less than the diameter of the borehole, allowing the fluid-tight pipe to be readily inserted into the hole but without the need for more plastic or elastic deformation, i.e. in this case elongation of the rigid or elastic material of the wall 2, than necessary, reducing the risk of cracks in the material during the deformation. Thus, in some embodiments of the present invention, the outer diameter of the right circular cylindrical shell forming the lateral wall 2 is within the range of 90-99% of the diameter of the borehole 10.

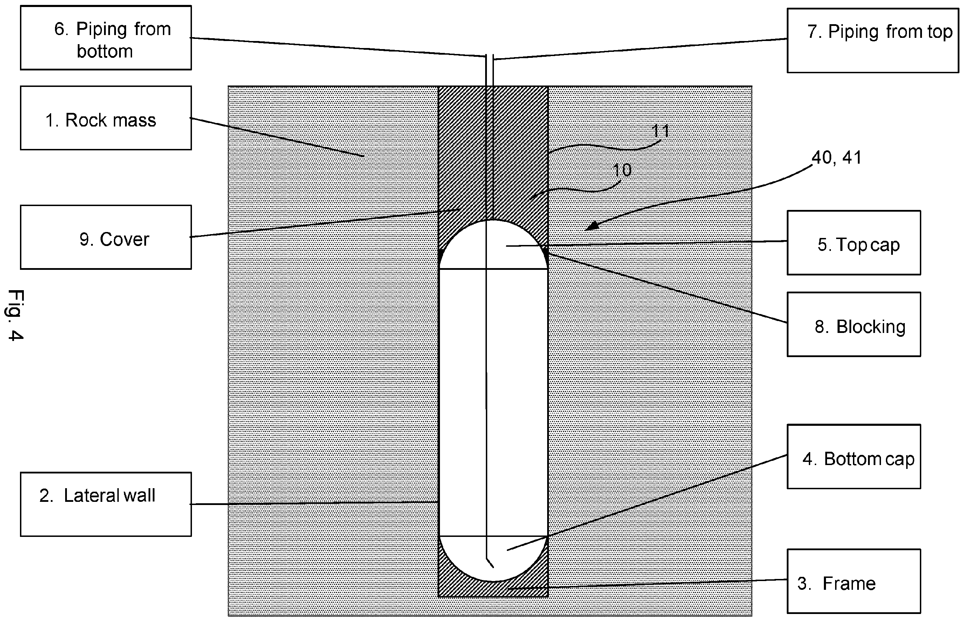

Figure 4 illustrates an embodiment of the fluid-tight subterranean fluid storage 40, formed by the fluid-tight pipe 41 inserted into the borehole 10. The storage 40, and thus the pipe 41, comprises the lateral wall 2, e.g. of a rigid or elastic material, in the form of a right circular cylindrical shell, which after plastic or elastic deformation forms a lining of the borehole 10 when in contact with the rock of the rock mass 1 at the inner surface 11 of the borehole. The storage 40, and thus the pipe 41, further comprises a bottom end cap 4 fastened to a bottom end of the lateral wall 2 and a top end cap 5 fastened to a top end of the lateral wall 2. The top end of is the end which is proximal to the earth/bedrock surface (i.e. the end closest to the above ground), while the bottom end is the end distal to the earth/bedrock surface (i.e. the end facing away from the above ground).

The bottom end cap 4 may be connected to a bottom of the borehole 10, e.g. by being in direct contact there with or being arranged against a rigid frame 3 standing on the bottom of the borehole and acting as a distance between the bottom end cap and the bottom of the bore hole. The space between the bottom end cap and the bottom of the borehole which may be formed by the frame 3 may be used to allow debris from the boring or the inner surface 11 of the borehole 10 to collect without interfering with the bottom end cap 4.

The top end cap 5 is typically below ground, i.e. below an upper end of the borehole 10. Conveniently, a cover 9 is provided above the top end cap, the weight of which may form a pressure on the top end cap which is close to or above the pressure P or the pressure of the fluid stored therein to help prevent the top end cap from being lifted by the pressure in the storage 40. The cover 9 may consist of or comprise any one or more of cement, concrete, crushed stone and macadam. A blocking 8, e.g. a metal ring, may be provided between the top end cap 5 and the cover 9 to prevent stones or other parts of the cover 9 to fall into any gap between the inner surface 11 of the borehole 10 and the outside of the lateral wall 2, especially before the plastic or elastic deformation thereof. In some embodiments of the present invention, the inserting of the pipe 41 into the borehole 10 comprises inserting the whole pipe into the borehole such that the top end cap 5 is below an upper end of the borehole, e.g. a distance within the range of 5-50 m below the upper end of the borehole, preferably within the range of 10-30 m. Alternatively, e.g. for smaller diameters of the pipe 41, the top end cap 5 may be placed above the ground surface and anchored with rock bolts to the rock mass 1. In that case, the upper part of the pipe, the part above ground, may be dimensioned for full pressure without deformation, e.g. plasticization.

For fluid communication with the inside of the storage 40, at least two pipings 6 and 7, typically each comprising at least one valve for turning on or off a fluid flow through the piping, may be arranged from above ground and through the top end cap 5, and thus also through any cover 9 there above. A liquid piping 6 may extend to close to the bottom of the storage 40, for evacuating liquid from the storage. Similarly, a gas piping 7 may be arranged with an opening at the top of the storage 40, for evacuating gas from the storage. When pressurizing the pipe 41 for deformation, e.g. plastic or elastic deformation, thereof using water pressurized to the pressure P, water may be pressed into the storage 40 via either of the liquid and gas pipings 6 or 7. However, after the deformation, the water may be evacuated via the liquid piping 6 by pumping gas into the storage 40 via the gas piping 7.

The borehole 10 may have any suitable size, depending on how much fluid it is desired to store, though there may be some technical or practical constraints depending on the boring technique used. In some embodiments of the present invention, the borehole has a depth within the range of 50-500 m, preferably 200-400 m. Typically, the borehole is vertical from the earth surface and down, but it is contemplated that also inclined boreholes, e.g. at an acute angle to a vertical axis, may be convenient for some applications. In some embodiments of the present invention, the diameter of the borehole 10 is within the range of 0.2-8 m, which are diameters obtained by conventional boring. The boring technique is selected in view of the diameter desired. For a diameter within the range of 0.2-0.6 m, hammer boring is suitably used. For a diameter within the range of 0.6-2 m, raise boring with a reamer which is folded out after drilling a pilot hole before the drill head is raised. For a diameter within the range of 2-8 m, an adjacent shaft or tunnel may be needed, whereby the pilot hole breaks into the adjacent shaft or tunnel and a wider reamer may be attached to the drill string before raising the drill head.

The fluid-tight pipe 41, and thus the resulting fluid storage 40, may have a length which is about 10-50 m less than the depth of the bore hole 10, corresponding to the distance of the top end cap 5 from the earth surface, e.g. a length within the range of 30-450 m, preferably 200-400 m. To achieve such a long pipe 41, a plurality of pipe segments may be welded, or otherwise joined, together to form a fluid tight lateral wall 2. Similarly, the top and bottom end caps 5 and 4 are conveniently welded, or otherwise joined, fluid-tightly, to the respective ends of the lateral wall 2.

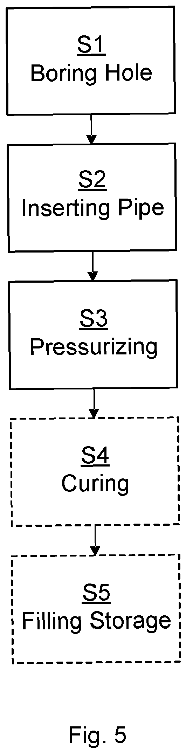

Figure 5 illustrates some embodiments of the method for preparing or constructing the fluid-tight subterranean fluid storage 40. A bore hole 10 is bored (drilled) S1 in a rock mass 1. Then, a fluid-tight pipe 41 is inserted S2 longitudinally into the borehole 10. The pipe comprises a lateral wall 2, e.g. of a rigid or elastic, preferably rigid, material in the form of a right circular cylindrical shell having an outer diameter which is smaller than a diameter of the borehole 10, a bottom end cap 4 fastened to a bottom end of the lateral wall 2, and a top end cap 5 fastened to a top end of the lateral wall 2. Then, via piping 7 through the top end cap 5, the fluid-tight pipe 41 is pressurized S3 to a pressure P above a predetermined threshold, e.g. dependent on an upper yield point of the rigid material, whereby the lateral wall 2 is deformed, e.g. plastically deformed in case of a rigid material or elastically deformed in case of an elastic material, until it is pressed against an inner surface 11 of the borehole 10 along a longitudinal extent of the lateral wall, forming a fluid-tight lining 2 of the borehole. The lateral wall 2, forming the lining 2, together with the bottom end cap 4 and the top end cap 5 thus form the fluid-tight subterranean fluid storage 40 in the borehole.

In case the lateral wall 2 is of a thermosetting material, the method may optionally comprise curing (S4) the lining 2 of the bore hole formed by the deformed lateral wall 2. The curing typically include raising the temperature of the thermosetting material to above a temperature at which the thermosetting material is cured. However, additionally or alternatively, other curing techniques may be included, such as UV radiation or the use of a curing agent.

In some embodiments of the present invention, the method optionally further comprises filling S5 the fluid storage 40, via piping 7 through the top end cap 5, with a pressurized fluid in gas and/or liquid form, e.g. hydrogen, methane, propane, natural gas, carbon dioxide, nitrogen, ammonia, air, water and/or ammonium, preferably hydrogen. In some embodiments, the pressurized fluid is at a pressure within the range of 50-1000 bar or 50-500 bar, preferably 200-300 bar.

Table 4 shows the amount of hydrogen which can be stored in the fluid storage 40 at some example diameters of the fluid storage at a depth/length of the fluid storage of 380 m and an absolute pressure in the fluid storage of 300 bar(a).

**Table 4**

| **Parameter** | **Unit** | **Example 1** | **Example 2** | **Example 3** |
|---|---|---|---|---|
| Borehole diameter | m | 0.6 | 1.5 | 3 |
| Lateral wall thickness | m | 0.005 | 0.0075 | 0.01 |
| Lateral wall inner diameter | m | 0,590 | 1.485 | 2.980 |
| Borehole depth | m | 400 | 400 | 400 |
| Length of covering above top end cap | m | 20 | 20 | 20 |
| Length of storage | m | 380 | 380 | 380 |
| Volume of storage | m³ | 104 | 658 | 2650 |
| Storage pressure | bar(a) | 300 | 300 | 300 |
| Temperature in storage | °C | 12 | 12 | 12 |
| Stored H₂ | kg | 2 100 | 12 900 | 51 500 |

In some embodiments of the present invention, the method may further comprise inspecting the inner surface 11 of the borehole 10 before inserting S2 the pipe 41, optionally mending holes or other irregularities in the surface 11 which could damage the lateral wall 2 when it is pressurized S3.

### Examples

In some embodiments, a geological survey is performed at a suitable location to determine suitability for preparing a storage 40 at the site. The survey could include locating a suitable rock mass 1 where crush or fault zones are not expected to occur. If necessary, core hole drilling, or equivalent, can be carried out in the area to find local crush or fault zones and to investigate other rock parameters.

Then the borehole 10 may be drilled. Optionally, a rim of suitable material may be mounted around where the borehole is to be drilled. This may be for personal safety and could prevent the deposition of unwanted material from the ground. A shaft may be drilled to a suitable depth (e.g. 50-500 m) and a suitable dimension (e.g. 0.2-8 m). Hammer drilling and/or raise drilling is suitably used, as discussed above. Raise drilling is suitably used if there is access to the lowest level via a rock tunnel. Raise drilling can also be used without access to the lowest level by drilling a pilot hole and in this pushing down a reamer which can then be folded out.

The inner surface 11 of the borehole 10 may be inspected for holes or other irregularities. The borehole 10 may conveniently be filled with water to counteract greater leakage and thus prevent gravel and stone from falling from the inner surface 11 wall of the borehole, to create cavities in the wall. The borehole may be measured, and the inner surface 11 filmed to find any cavities or other defects.

Optionally, or if needed, a part of the inner surface 11 wall may be repaired to be smoother, e.g. at a region where the rock mass has crumbled at the inner surface 11 wall. For instance, any cavities may be filled in with a suitable material. The bottom of the borehole 10 may be cleaned.

The fluid-tight pipe 41 may then be assembled and inserted into the borehole 10. Metal pipes may be axially joined (e.g. welded) to form the lateral wall 2. These pipes typically have a diameter that is slightly smaller than the diameter of the borehole 10. 12-meter pipes may be suitable to use, which in stages are joined together with suitable automatic welding with subsequent checks and, if necessary, normalization of the weld joint. The pipes may be filled with water in stages while being lowered into the water-filled borehole so that the top of the joined pipes is at a suitable working height for welding the next pipe. The pipes may be fixed dumb in a suitable way so that a straight joint is obtained. Note that the upper pipes may have to withstand the external water pressure created by the weight of all submerged lower pipes.

Before the bottom end cap 4 is mounted at the bottom of the borehole, a steel frame 3 or bearing with an edge may be mounted. The frame may be formed after the bottom of the borehole and if this is done as a distance with openings, any falling stone and gravel can be collected in the frame. This implies that the position of the bottom end cap 4 may be fixed exactly laterally and vertically. With this procedure, the bottom end cap may be made completely flat. Alternatively, the bottom of the borehole may be ground as the shape of the bottom end cap, or the bottom may be cast with the same shape as the end cap. Via a service pipe, a hydraulic hammer may be be lowered to the bottom end cap 4 and with this hammer, via the end cap 4, smash any loose stones that have fallen down during assembly of the pipe 41. This may give the end cap a desired direct contact with the bottom of the borehole.

At the top of the lateral wall 2, the top end cap 5 may be mounted. Both end caps 4 and 5 may be made to withstand maximum pressure without plasticizing. Evacuation piping 6 from the bottom end cap 4 to the ground surface, with a lyre or other suitable method for possible expansion, may also be mounted in stages with suitably the same length as the lateral wall 2. The evacuation pipe 6 may be sealed from the outside at the upper end cap 5 and extended to above the ground. Inlet piping 7 may be mounted from above the ground surface through the top end cap 5 and may be welded tightly to also withstand the maximum pressure in the storage 40. Optionally, the upper end of the storage 40 is provided with a service pipe, e.g. a manhole, in a suitable dimension to the ground surface and designed to withstand the maximum pressure in the storage.

An alternative mounting method of the storage 40 may be to build it in its entirety, or in larger parts, above ground and then with cranes lower it into the borehole 10.

The top end cap 5 may be cast over with a suitable thickness of concrete and/or may be anchored by means of drilling bolts in the inner surface 11 rock wall. Before casting, the space between the inner surface 11 and the top end cap 5 may be sealed. This may be done with a blocking 8, suitably a wedge-shaped metal ring, which then may also provide a smooth transition when plasticizing the lateral wall 2 against the inner surface 11. Thereafter, the remaining borehole above the top end cap 5 may be filled and packed with suitable material as part of the cover 9, such as crushed rock or other heavy material that can partially transfer the upward force (from the overpressure in the storage 40) from the top end cap to the surrounding rock. The distance between the top end cap 5 and the ground surface may be selected such that the weight of the overlying rock mass is greater than the lifting force from the overpressure in the storage 40. This distance above the top end cap may be dependent on the dimension/diameter of the storage, maximum pressure in the storage, distance between adjacent boreholes 10 (if there are several in the same area) and on whether rock bolts are mounted to take all or part of the force from the overpressure on the top end cap.

Then, the pipe 41 is plastically expanded against the inner surface 11 by pressing it the inside of the pipe 41 with water to the pressure necessary.

If needed, the inside of the storage 40 may be cleaned from debris before the storage is filled with the fluid to be stored therein.

Filling the fluid storage 40 with hydrogen may be achieved by the hydrogen gas pushing away the water as the pressure increases, the hydrogen entering the storage via the gas piping 7 while the water exits the storage via the liquid piping 6. Other methods of evacuating the water and filling with fluid such as hydrogen may also be suitable. When the storage 40 is filled with a light gas such as hydrogen, pressure control may be installed so that the pressure in the storage is always higher than the groundwater pressure outside the bottom of the storage. Having hydrogen gas in the storage below the external groundwater pressure, or during service, the storage could be filled with oxygen-poor water to balance the external groundwater pressure. The water system outside of the storage may then need to handle the water dissolved hydrogen in a safe way when the pressure is reduced.

The lowest pressure of the stored fluid could alternatively, if necessary, be increased slightly so that the rigid material of the lateral wall is not allowed to spring back at all, so that the rigid material is always in full contact with the inner surface 11 of the borehole. This may reduce the risk of cracks by exhausting the rigid material during repeated cycles.

## Claims

1. A method of preparing a fluid-tight subterranean fluid storage (40), the method comprising:
boring (S1) a borehole (10) in a rock mass (1);
inserting (S2) a fluid-tight pipe (41) longitudinally into the borehole (10), the pipe comprising a lateral wall (2) of a rigid material in the form of a right circular cylindrical shell having an outer diameter which is smaller than a diameter of the borehole (10), a bottom end cap (4) fastened to a bottom end of the lateral wall (2), and a top end cap (5) fastened to a top end of the lateral wall (2); and
via piping (7) through the top end cap (5), pressurizing (S3) the fluid-tight pipe (41) to a pressure (P) above a predetermined threshold dependent on an upper yield point, R_{eH}, of the rigid material, whereby the lateral wall (2) is plastically deformed until it is pressed against an inner surface (11) of the borehole (10) along a longitudinal extent of the lateral wall, forming a fluid-tight lining (2) of the borehole;
wherein the lining (2) together with the bottom end cap (4) and the top end cap (5) form the fluid-tight subterranean fluid storage (40) in the borehole.

2. The method of claim 1, wherein the yield point, R_{eH}, of the rigid material is within the range of 10-600 MPa, e.g. 200-600 MPa, preferably 200-400 MPa.

3. The method of claim 1 or 2, wherein the rigid material of the lateral wall (2) is metallic or polymeric, preferably steel e.g. S235JR, S275JR, S355N or S420N.

4. The method of claim 3, wherein the rigid material is a thermoplastic polymeric material.

5. The method of claim 4, wherein the rigid material is a thermosetting polymeric material, e.g. fibre-reinforced, the method further comprising curing (S4) the lining (2).

6. The method of any preceding claim, wherein, during the pressurizing (S3), the fluid-tight pipe (41) is filled with water whereby the pressure (P) is the pressure of the water in the pipe.

7. The method of claim 6, wherein the water is, after the plastic deformation, evacuated via liquid piping (6) through the top end cap (5) by pumping gas into the storage (40) via gas piping (7) through the top end cap (5).

8. The method of any preceding claim, wherein the inserting (S2) comprises inserting the whole pipe (41) into the borehole (10) such that the top end cap (5) is below an upper end of the borehole, e.g. a distance within the range of 5-50 m below the upper end of the borehole, preferably within the range of 10-30 m.

9. The method of any preceding claim, wherein the pressurizing (S3) is before filling the fluid storage (40) with a pressurized fluid to be stored therein.

10. The method of any preceding claim, further comprising filling (S5) the fluid storage (40), via piping (7) through the top end cap (5), with a pressurized fluid in gas and/or liquid form, e.g. hydrogen, H₂; methane, CH₄; propane, C₃H₈; natural gas; carbon dioxide, CO₂; nitrogen, N₂; ammonia, NH₃; air; water; and/or ammonium, NH₄; preferably hydrogen.

11. The method of claim 10, wherein the pressurized fluid is at a pressure within the range of 50-1000 bar, e.g. 50-500 bar, preferably 200-300 bar.

12. A fluid-tight subterranean fluid storage (40) prepared by the method of any preceding claim.

13. A fluid-tight subterranean fluid storage (40) comprising:
a fluid-tight lining (2) of a bore hole (10) in a rock mass (1);
a bottom end cap (4) fastened to a bottom end of the lining (2);
a top end cap (5) fastened to a top end of the lining (2); and
piping (7) through the top end cap (5);
wherein the lining (2) is of a rigid material and formed by a plastically deformed right circular cylindrical shell, inserted longitudinally into the borehole and
deformed by means of an overpressure applied via the piping (7) to a pressure (P) above a predetermined threshold dependent on an upper yield point, R_{eH}, of the rigid material.

## Patentansprüche

1. Verfahren zur Herstellung eines fluiddichten unterirdischen Fluidspeichers (40), wobei das Verfahren Folgendes umfasst:
Bohren (S1) eines Bohrlochs (10) in eine Gesteinsmasse (1) ;
Einführen (S2) eines fluiddichten Rohrs (41) längs in das Bohrloch (10), wobei das Rohr eine Seitenwand (2) aus einem starren Material in Form einer genau kreisförmigen zylindrischen Hülle mit einem Außendurchmesser, der kleiner als ein Durchmesser des Bohrlochs (10) ist, eine untere Abschlusskappe (4), die an einem unteren Ende der Seitenwand (2) befestigt ist, und eine obere Abschlusskappe (5), die an einem oberen Ende der Seitenwand (2) befestigt ist, umfasst; und
über Rohrleitungen (7) durch die obere Abschlusskappe (5) hindurch, Druckbeaufschlagen (S3) des fluiddichten Rohrs (41) bis zu einem Druck (P) über einem vorgegebenen Schwellenwert, der von einer oberen Streckgrenze, R_{eH}, des starren Materials abhängig ist, wobei die Seitenwand (2) plastisch verformt wird, bis sie entlang einer Längserstreckung der Seitenwand gegen eine Innenfläche (11) des Bohrlochs (10) gedrückt wird, wodurch eine fluiddichte Auskleidung (2) des Bohrlochs ausgebildet wird;
wobei die Auskleidung (2) zusammen mit der unteren Abschlusskappe (4) und der oberen Abschlusskappe (5) den fluiddichten unterirdischen Fluidspeicher (40) in dem Bohrloch ausbildet.

2. Verfahren nach Anspruch 1, wobei die Streckgrenze, R_{eH}, des starren Materials innerhalb des Bereichs von 10 - 600 MPa, z. B. 200 - 600 MPa, vorzugsweise 200 - 400 MPa, liegt.

3. Verfahren nach Anspruch 1 oder 2, wobei das starre Material der Seitenwand (2) ein Metall oder ein Polymer, vorzugsweise Stahl, z. B. S235JR, S275JR, S355N oder S420N, ist.

4. Verfahren nach Anspruch 3, wobei das starre Material ein thermoplastisches Polymermaterial ist.

5. Verfahren nach Anspruch 4, wobei das starre Material ein, z. B. faserverstärktes, wärmehärtendes Polymermaterial ist, wobei das Verfahren ferner das Aushärten (S4) der Auskleidung (2) umfasst.

6. Verfahren nach einem vorhergehenden Anspruch, wobei während des Druckbeaufschlagens (S3) das fluiddichte Rohr (41) mit Wasser gefüllt wird, wobei der Druck (P) der Druck des Wassers in dem Rohr ist.

7. Verfahren nach Anspruch 6, wobei das Wasser nach der plastischen Verformung über Flüssigkeitsrohrleitungen (6) durch die obere Abschlusskappe (5) hindurch hinausbefördert wird, indem über Gasrohrleitungen (7) durch die obere Abschlusskappe (5) hindurch Gas in den Speicher (40) gepumpt wird.

8. Verfahren nach einem vorhergehenden Anspruch, wobei das Einführen (S2) ein Einführen des gesamten Rohrs (41) in das Bohrloch (10) umfasst, derart dass die obere Abschlusskappe (5) sich unterhalb eines oberen Endes des Bohrlochs befindet, z. B. in einer Entfernung innerhalb des Bereichs von 5 - 50 m unterhalb des oberen Endes des Bohrlochs, vorzugsweise innerhalb des Bereichs von 10 - 30 m.

9. Verfahren nach einem vorhergehenden Anspruch, wobei das Druckbeaufschlagen (S3) vor dem Füllen des Fluidspeichers (40) mit einem darin zu speichernden druckbeaufschlagten Fluid erfolgt.

10. Verfahren nach einem vorhergehenden Anspruch, das ferner das Füllen (S5) des Fluidspeichers (40) - über Rohrleitungen (7) durch die obere Abschlusskappe (5) hindurch - mit einem druckbeaufschlagten Fluid in Gas- und/oder flüssiger Form, z. B. Wasserstoff, H₂; Methan, CH₄; Propan, C₃H₈; Erdgas; Kohlendioxid, CO₂; Stickstoff, N₂; Ammoniak, NH₃; Luft; Wasser; und/oder Ammonium, NH₄; vorzugsweise Wasserstoff, umfasst.

11. Verfahren nach Anspruch 10, wobei das druckbeaufschlagte Fluid mit einem Druck innerhalb des Bereichs von 50 - 1000 bar, z. B. 50 - 500 bar, vorzugsweise 200 - 300 bar, vorliegt.

12. Fluiddichter unterirdischer Fluidspeicher (40), der mit dem Verfahren nach einem vorhergehenden Anspruch hergestellt wird.

13. Fluiddichter unterirdischer Fluidspeicher (40), umfassend:
eine fluiddichte Auskleidung (2) eines Bohrlochs (10) in einer Gesteinsmasse (1);
eine untere Abschlusskappe (4), die an einem unteren Ende der Auskleidung (2) befestigt ist;
eine obere Abschlusskappe (5), die an einem oberen Ende der Auskleidung (2) befestigt ist; und
Rohrleitungen (7) durch die obere Abschlusskappe (5) hindurch;
wobei die Auskleidung (2) aus einem starren Material gefertigt und durch eine plastisch verformte genau kreisförmige zylindrische Hülle ausgebildet ist, die längs in das Bohrloch eingeführt und mittels eines Überdrucks verformt wird, der über die Rohrleitungen (7) bis zu einem Druck (P) über einem vorgegebenen Schwellenwert, der von einer oberen Streckgrenze, R_{eH}, des starren Materials abhängig ist, angelegt wird.

## Revendications

1. Procédé de préparation d'un stockage souterrain de fluide étanche (40), le procédé comprenant :
le forage (S1) d'un trou de forage (10) dans une masse rocheuse (1) ;
l'insertion (S2) d'un tuyau étanche aux fluides (41) dans le sens longitudinal dans le trou de forage (10), le tuyau comprenant une paroi latérale (2) en matériau rigide sous la forme d'une coquille cylindrique circulaire droite dont le diamètre extérieur est inférieur au diamètre du trou de forage (10), un bouchon d'extrémité inférieur (4) fixé à l'extrémité inférieure de la paroi latérale (2), et un bouchon d'extrémité supérieur (5) fixé à l'extrémité supérieure de la paroi latérale (2) ; et
par l'intermédiaire de la tuyauterie (7) à travers le bouchon supérieur (5), la mise sous pression (S3) du tuyau étanche (41) à une pression (P) supérieure à un seuil prédéterminé dépendant d'une limite supérieure d'élasticité, R_{eH}, du matériau rigide, de sorte que la paroi latérale (2) est déformée de manière plastique jusqu'à ce qu'elle soit pressée contre une surface intérieure (11) du trou de forage (10) le long d'une étendue longitudinale de la paroi latérale, formant un revêtement étanche aux fluides (2) du trou de forage ;
dans lequel le revêtement (2), le bouchon inférieur (4) et le bouchon supérieur (5) forment ensemble le stockage souterrain de fluide étanche (40) dans le trou de forage.

2. Procédé selon la revendication 1, dans lequel la limite d'élasticité, R_{eH}, du matériau rigide est comprise entre 10 et 600 MPa, par exemple comprise entre 200 et 600 MPa, de préférence comprise entre 200 et 400 MPa.

3. Procédé selon la revendication 1 ou la revendication 2, dans lequel le matériau rigide de la paroi latérale (2) est métallique ou polymère, de préférence en acier, par exemple de type S235JR, S275JR, S355N ou S420N.

4. Procédé selon la revendication 3, dans lequel le matériau rigide est un matériau polymère thermoplastique.

5. Procédé selon la revendication 4, dans lequel le matériau rigide est un matériau polymère thermodurcissable, par exemple renforcé par des fibres, le procédé comprenant en outre la réticulation (S4) du revêtement (2).

6. Procédé selon l'une quelconque des revendications précédentes, dans lequel, lors de la mise sous pression (S3), la conduite étanche (41) est remplie d'eau, la pression (P) étant la pression de l'eau dans la conduite.

7. Procédé selon la revendication 6, dans lequel l'eau est, après la déformation plastique, évacuée au moyen de la tuyauterie de liquide (6) à travers le bouchon d'extrémité supérieur (5) en pompant du gaz dans le stockage (40) au moyen de la tuyauterie de gaz (7) à travers le bouchon d'extrémité supérieur (5).

8. Procédé selon l'une quelconque des revendications précédentes, dans lequel l'insertion (S2) comprend l'insertion du tube entier (41) dans le trou de forage (10) de telle sorte que le bouchon d'extrémité supérieur (5) se trouve en dessous d'une extrémité supérieure du trou de forage, par exemple à une distance comprise entre 5 et 50 m en dessous de l'extrémité supérieure du trou de forage, de préférence à une distance comprise entre 10 et 30 m.

9. Procédé selon l'une quelconque des revendications précédentes, dans lequel la mise sous pression (S3) a lieu avant le remplissage du stockage de fluide (40) avec un fluide sous pression destiné à être stocké dans ce dernier.

10. Procédé selon l'une quelconque des revendications précédentes, comprenant en outre le remplissage (S5) du stockage de fluide (40), via la tuyauterie (7) à travers l'embout supérieur (5), avec un fluide sous pression sous forme de gaz et/ou de liquide, par exemple de l'hydrogène, H₂ ; du méthane, CH₄ ; du propane, C₃H₈ ; du gaz naturel ; du dioxyde de carbone, CO₂; de l'azote, N₂ ; de l'ammoniac, NH₃ ; de l'air ; de l'eau ; et/ou de l'ammonium, NH₄ ; de préférence, de l'hydrogène.

11. Procédé selon la revendication 10, dans lequel le fluide sous pression est à une pression comprise entre 50 et 1000 bar, par exemple comprise entre 50 et 500 bar, de préférence comprise entre 200 et 300 bar.

12. Stockage souterrain de fluide étanche (40) préparé au moyen du procédé selon l'une quelconque des revendications précédentes.

13. Stockage souterrain de fluide étanche (40) comprenant :
un revêtement étanche (2) d'un trou de forage (10) dans une masse rocheuse (1) ;
un capuchon d'extrémité inférieur (4) fixé à l'extrémité inférieure du revêtement (2) ;
un bouchon supérieur (5) fixé à l'extrémité supérieure du revêtement (2) ; et
une tuyauterie (7) à travers l'embout supérieur (5) ;
dans lequel le revêtement (2) est constitué d'un matériau rigide et d'une coque cylindrique circulaire droite déformée de manière plastique, insérée dans le sens longitudinal dans le trou de forage et déformée au moyen d'une surpression appliquée par le biais de la tuyauterie (7) à une pression (P) supérieure à un seuil prédéterminé dépendant d'une limite supérieure d'élasticité, R_{eH}, du matériau rigide.
